# FASCICULE DE BREVET EUROPEEN

(11) **EP 3 317 097 B1**
(45) Date de publication et mention de la délivrance du brevet: **05.08.2020**
(21) Numéro de dépôt: 16742358.1
(22) Date de dépôt: 30.06.2016
(51) Int. Cl.: B32B 17/10, B64C 1/14, H05B 3/86

(54) **VITRAGE CHAUFFANT A FEUILLE DE VERRE EXTERIEURE AMINCIE ET COUCHE CHAUFFANTE A LIGNES DE SEPARATION DE FLUX**
HEIZVERGLASUNG MIT VERDÜNNTER AUSSENSCHICHT AUS GLAS UND HEIZSCHICHT MIT FLUSSTRENNLEITUNGEN
HEATING GLAZING WITH THINNED OUTER SHEET OF GLASS AND HEATING LAYER WITH FLOW SEPARATION LINES

(30) Priorité: 02.07.2015 FR 1556269
(43) Date de publication de la demande: 09.05.2018
(73) Titulaire: SAINT-GOBAIN GLASS FRANCE, 92400 Courbevoie (FR)
(72) Inventeur: TONDU, Thomas, 45600 Sully (FR); CHAUSSADE, Pierre, 45100 Orleans (FR); LEGOIS, Vincent, 45110 Germigny des Pres (FR)
(74) Mandataire: Saint-Gobain Recherche
(86) Numéro de dépôt international: PCT/FR2016/051652
(87) Numéro de publication internationale: WO 2017/001792

(56) Documents cités:
- EP-A1- 0 353 141
- EP-A1- 0 893 938
- WO-A1-2012/004280
- WO-A1-2015/014511
- CA-A1- 2 893 808
- CA-A1- 2 894 012
- US-A- 3 723 080
- US-A- 4 278 875
- US-A1- 2008 318 011
- US-A1- 2011 198 334
- "High strength windshield for 747 jet ED - Miracle & S L Donaldson D B", COMPOSITES, IPC BUSINESS PRESS LTD. HAYWARDS HEATH, GB, vol. 3, no. 4, 1 July 1972 (1972-07-01), page 146, XP024039194, ISSN: 0010-4361, DOI: 10.1016/0010-4361(72)90001-8 [retrieved on 1972-07-01]

## Description

La présente invention a trait aux vitrages chauffants (fonction antigivre) utilisant une couche conductrice, en particulier destinés à l'aéronautique (avion et hélicoptère).

Les vitrages aéronautiques chauffants sont des feuilletés de deux ou trois plis verriers ou organiques. La prévention de l'apparition de givre sur les vitrages aéronautiques peut se faire par chauffage par effet joule au moyen d'une couche transparente et conductrice électrique. La couche chauffante est déposée avec des hétérogénéités de résistance de surface afin de limiter l'hétérogénéité de puissance de surface (on ne sait chauffer uniformément que des rectangles). Typiquement la couche chauffante est déposée sur un verre de 3mm d'épaisseur. Le chauffage est régulé au moyen d'une sonde de température représentative de la température moyenne de la couche chauffante.

Les supports de couche chauffante actuellement utilisés, typiquement en verre de 3mm d'épaisseur car historiquement en verre semi trempé (la trempe thermique des verres très minces est impossible) imposent un chauffage souvent excessif car l'épaisseur de verre dégrade fortement l'information sur la température réelle de la peau externe du vitrage qu'il faut maintenir au-dessus de 0°C. Par ailleurs, la zone la plus sujette au givre est celle présentant la plus faible puissance spécifique (à flux égal de gouttelettes d'eau surfondues qui givrent au contact du verre à moins de 0°C) et c'est sur cette zone que doit être dimensionné le système de chauffage. Dans les zones les plus chauffées, la consommation d'énergie est donc excessive. Par exemple, US2008318011 concerne un vitrage chauffant feuilleté comme vitrage de cockpit d'avion et divulgue un vitrage feuilleté comprenant au moins deux plis superposés de substrat transparent, avec interposition entre deux plis voisins d'une couche intercalaire, ledit vitrage comportant, dans son épaisseur ou en surface au moins une couche mince conductrice et transparente, ladite couche ou lesdites couches étant chauffantes en vue du dégivrage et/ou du désembuage par effet Joule, au moins une couche mince comportant des lignes de séparation de flux formées par gravure pour guider l'intensité de courant d'une bande à l'autre, lesdites lignes de séparation de flux ayant une épaisseur de 0,1 à 0,2 mm.

L'invention a donc pour objectif principal de réduire la puissance suffisante d'un vitrage chauffant pour garantir l'absence de formation de givre sur toute sa surface.

A cet effet l'invention a pour objet un vitrage feuilleté comprenant un premier pli structurel assemblé à une première feuille de verre de 0,5 à 1 ,5 mm d'épaisseur par l'intermédiaire d'une première couche adhésive intercalaire, caractérisé en ce que ladite première feuille de verre constitue une première face extérieure du vitrage feuilleté, destinée à être en contact avec l'atmosphère extérieure, en ce que la face de ladite première feuille de verre orientée vers ladite première couche adhésive intercalaire porte une première couche conductrice chauffante de 2 Angströms à 500 nm d'épaisseur, en ce que ladite première couche conductrice chauffante présente des lignes de séparation de flux de 0,05 à 0,2 mm d'épaisseur espacées de 8 à 20 mm, formées par gravure pour guider l'intensité de courant entre deux bandes d'amenée de courant disposées le long de deux bords opposés du vitrage, en ce que ledit premier pli structurel consiste en une feuille de verre d'épaisseur comprise entre 4 à 10 mm ou de matériau polymère d'épaisseur comprise entre 5 et 20 mm, et en ce que ladite première couche adhésive intercalaire consiste en une couche de polyvinylbutyral (PVB), polyuréthane (PU) ou poly(éthylène-acétate de vinyle) (EVA) de 0,5 à 20, de préférence 1 à 16 mm d'épaisseur.

Le « pli structurel » est d'épaisseur suffisante pour assurer une résistance mécanique recherchée. Le vitrage feuilleté de l'invention en comporte un ou plusieurs, notamment trois au plus.

Pour constituer ladite première feuille de verre, sont disponibles sur le marché des feuilles de verre à matrice aluminosilicate en épaisseurs aussi faibles que de moins de 1 mm, ce verre pouvant être renforcé chimiquement (et pas thermiquement) et constituer ainsi des plis chauffants résistants mécaniquement, notamment en faces avant de vitrages. L'utilisation d'un verre mince permet d'abaisser la température de régulation, ce qui se traduit par de nombreux avantages :
- une consommation électrique réduite dans les phases de vol non givrantes, ainsi qu'au sol quand la puissance disponible est limitée,
- des contraintes thermomécaniques réduites et donc une amélioration de la fiabilité,
- un temps de dégivrage au sol réduit,
- une sensible réduction des risques de surchauffe locaux durant les transitoires d'allumage au sol en conditions froides.

L'utilisation d'un vitrage à lignes de séparation de flux (dit également à lignes de flux) permet une meilleure homogénéité de chauffe, ce qui induit :
- une réduction de puissance électrique globale pour une même puissance spécifique au point le plus froid,
- une réduction de la capacité des générateurs électriques,
- une diminution de la température des zones les plus chaudes pouvant engendrer un vieillissement du vitrage,
- un positionnement plus aisé des sondes de température,
- une sensible réduction des risques de surchauffe locaux durant les transitoires d'allumage au sol en conditions froides.

Ainsi, par les mesures techniques de l'invention, la puissance totale d'un vitrage permettant d'assurer le non-givrage sur toute sa surface peut être réduite tout en améliorant considérablement l'homogénéité de chauffe.

Conformément à d'autres caractéristiques préférées du vitrage feuilleté de l'invention :
- il comprend un second pli structurel assemblé au premier par l'intermédiaire d'une seconde couche adhésive intercalaire ;
- il comprend une seconde feuille de verre de 0,5 à 1,5 mm d'épaisseur assemblée audit premier ou second pli structurel par l'intermédiaire d'une troisième couche adhésive intercalaire ;
- ladite seconde feuille de verre constitue une seconde face extérieure du vitrage feuilleté, et la face de ladite seconde feuille de verre orientée vers ladite troisième couche adhésive intercalaire porte une seconde couche conductrice chauffante de 2 Angströms à 500 nm d'épaisseur ;
- ladite seconde couche conductrice chauffante présente des lignes de séparation de flux de 0,05 à 0,2 mm d'épaisseur espacées de 8 à 20 mm ;
- lesdits premier et second plis structurels consistent chacun indépendamment l'un de l'autre en une feuille de verre d'épaisseur comprise entre 4 à 10 mm ou de matériau polymère d'épaisseur comprise entre 5 et 20 mm ; il convient de limiter le poids du vitrage feuilleté, en particulier lorsqu'il est destiné à un véhicule de transport : quand tous les plis structurels sont en matériau polymère, par exemple, la somme des épaisseurs de tous les plis structurels n'excède pas 30 mm ;
- lesdits premier et second plis structurels consistent chacun indépendamment l'un de l'autre en une feuille de verre semi-trempé thermiquement ou renforcé chimiquement, ou de poly (méthacrylate de méthyle) (PMMA) ou de polycarbonate (PC) ;
- lesdites première et seconde feuilles de verre de 0,5 à 1,5 mm d'épaisseur sont renforcées chimiquement ;
- lesdites première, seconde et troisième couches adhésives intercalaires consistent, indépendamment l'une de l'autre en une couche de polyvinylbutyral (PVB), polyuréthane (PU) ou poly(éthylène-acétate de vinyle) (EVA) de 0,5 à 20, de préférence 1 à 16 mm d'épaisseur ;
- lesdites première et seconde couches conductrices chauffantes consistent indépendamment l'une de l'autre en une couche d'oxyde conducteur tel qu'oxyde d'indium dopé à l'étain (ITO), oxyde d'étain dopé au fluor (SnO₂:F) ou oxyde de zinc dopé à l'aluminium (AZO) de 20 à 500 nm d'épaisseur, ou en une couche métallique telle que d'or de 2 à 100 Angströms d'épaisseur ;
- les lignes de séparation de flux sont disposées suivant des lignes sensiblement parallèles qui se raccordent sensiblement orthogonalement à leurs deux bandes d'amenée de courant respectives et qui présentent des courbures ou inflexions lorsque lesdites deux bandes ou parties desdites deux bandes en regard forment un angle entre elles ; cette configuration accroît le degré d'homogénéité de températures sur toute la surface du vitrage feuilleté chauffant : on évite le ou les points froids et/ou diminue la différence entre points froid et chaud ;
- ladite première ou seconde couche conductrice chauffante présente un gradient d'épaisseurs ; il s'agit de procurer des différences de résistance électrique sur toute la surface de la couche conductrice chauffante, là encore dans le but d'accroître l'homogénéité des températures sur toute la surface du vitrage chauffé en conditions froides.

L'invention a d'autre part pour objet :
- l'application du vitrage feuilleté décrit ci-dessus comme vitrage de cockpit d'avion ou d'hélicoptère ;
- une telle application comme vitrage antigivre ; le terme « antigivre » désigne la fonction d'empêcher la formation de givre sur la face extérieure du vitrage feuilleté côté atmosphère extérieure ; la feuille de verre constituant cette face porte alors une couche conductrice chauffante selon l'invention ;
- une telle application comme vitrage antibuée ; on désigne ici indifféremment le fait d'empêcher la formation de buée (fonction antibuée proprement dite) ou bien de faire disparaître la buée (fonction désembuante) de la face extérieure du vitrage feuilleté côté intérieur du véhicule ; la feuille de verre constituant cette face porte alors une couche conductrice chauffante selon l'invention.

L'invention sera mieux comprise à la lumière de la description des dessins en annexe, dans lesquels :
- la Figure 1 représente des courbes de la température optimale de régulation en fonction du rapport de puissance de chauffe au point froid sur la puissance de chauffe au point de régulation, rapport appelé K_{c}, pour différentes épaisseurs de la feuille de verre en contact avec l'atmosphère extérieure constitutive du vitrage feuilleté;
- les Figures 2a et 2b sont des représentations schématiques d'un vitrage feuilleté chauffant connu, respectivement conforme à l'invention ; et
- les Figures 3a et 3b sont des courbes de puissance de chauffe, respectivement de diminution de puissance de chauffe pour différentes configurations de vitrage feuilleté.

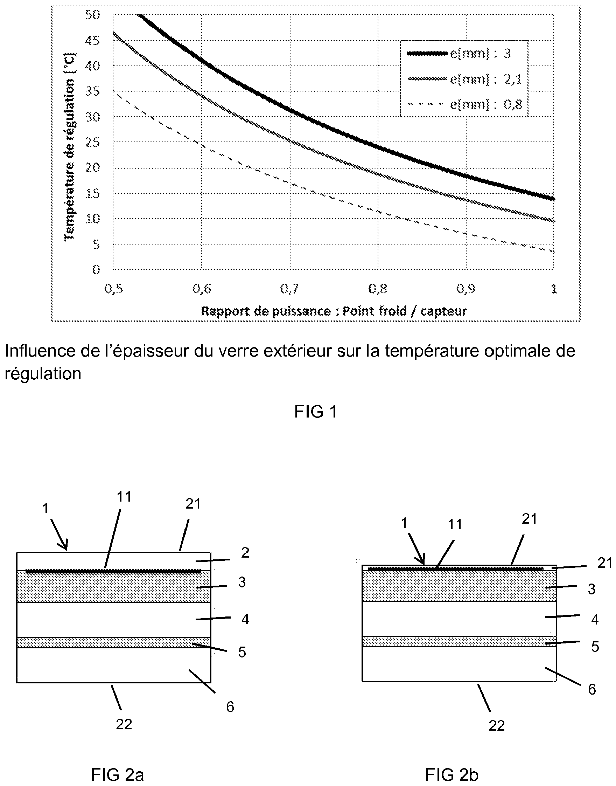

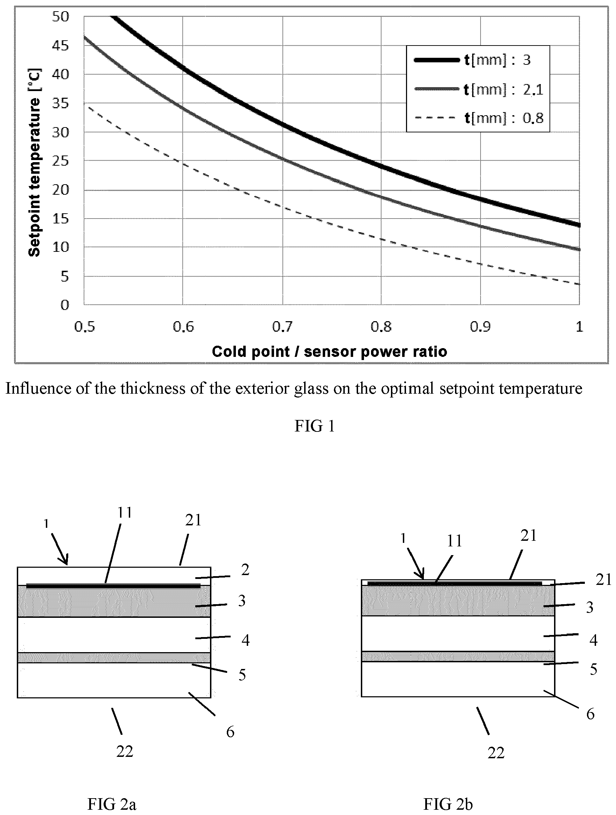

En référence à la Figure 1, on voit, pour chacune des épaisseurs de la feuille de verre extérieure, que plus la température du vitrage chauffant est homogène sur toute sa surface, c'est-à-dire plus le rapport de puissances de chauffe au point froid /capteur est proche de 1, plus la température optimale de régulation (appliquée au capteur) est basse.

Pour l'essentiel, plus l'épaisseur de la feuille de verre extérieure est faible, plus la température optimale de régulation est basse. Pour un rapport K_{c} de puissances au point froid/capteur de 0,7, on passe d'une température optimale de régulation de 31°C pour une feuille de verre extérieure de 3 mm d'épaisseur à une température optimale de régulation de 17 °C pour une feuille de verre extérieure de 0,8 mm d'épaisseur.

Les courbes de la Figure 1 sont établies à partir de calculs qui dépendent des hypothèses convectives et de collection d'eau sur le vitrage, hypothèses qui sont bien évidemment les mêmes pour les trois courbes de la figure.

Sur les Figures 2a et 2b, on a considéré deux configurations de vitrages de type pare-brise d'avion, classique, respectivement « verre mince », présentées en coupe.

Chacun des deux vitrages feuilletés 1 comprend un premier et un second plis structurels 4, 6, constitués chacun d'une feuille de verre silicosodocalcique en pleine trempe thermique (contrainte de surface en compression de 150 MPa environ) ou renforcé chimique de 8 mm d'épaisseur. Le verre n'est pas nécessairement silicosodocalcique, mais peut être du type aluminosilicate, ou au lithium... Les plis 4, 6 sont collés par une couche 5 de polyvinylbutyral de 2 mm d'épaisseur. Le pli 6 constitue la face extérieure 22 du vitrage feuilleté 1, côté intérieur cabine.

Une feuille de verre 2 semi-trempé thermique ou renforcé chimique de 3 mm d'épaisseur sur la Figure 2a, renforcé chimique de 0,8 mm d'épaisseur sur la Figure 2b, est collée au premier pli structurel 4 par l'intermédiaire d'une couche de polyvinylbutyral 3 de 8 mm d'épaisseur. La feuille de verre 2 constitue la face extérieure 21 du vitrage feuilleté 1, côté extérieur cabine. La face de la feuille de verre 2 orientée vers l'intérieur du feuilleté porte une couche conductrice chauffante 11 d'oxyde d'indium dopé à l'étain (ITO) de 200 nm d'épaisseur, présentant ou non, selon les échantillons, des lignes de séparation de flux de 0,08 mm d'épaisseur espacées de 10 mm, formées par gravure laser.

La présence ou l'absence des lignes de séparation de flux ou lignes de flux permettent d'obtenir des homogénéités de puissance de chauffe différentes caractérisées par les ratios entre la puissance spécifique développée dans la zone la plus froide du vitrage et au niveau de la sonde de régulation : 0.6 sans lignes de flux et 0.8 avec lignes de flux dans le cas présent.

On calcule alors dans des conditions de vol convectives (150W/m²/°C) sèches la consommation électrique du vitrage en fonction de la température ambiante. On suppose ici que la sonde est représentative de la puissance moyenne du vitrage.

Pour ces calculs on a considéré que la température de régulation est adaptée au vitrage.

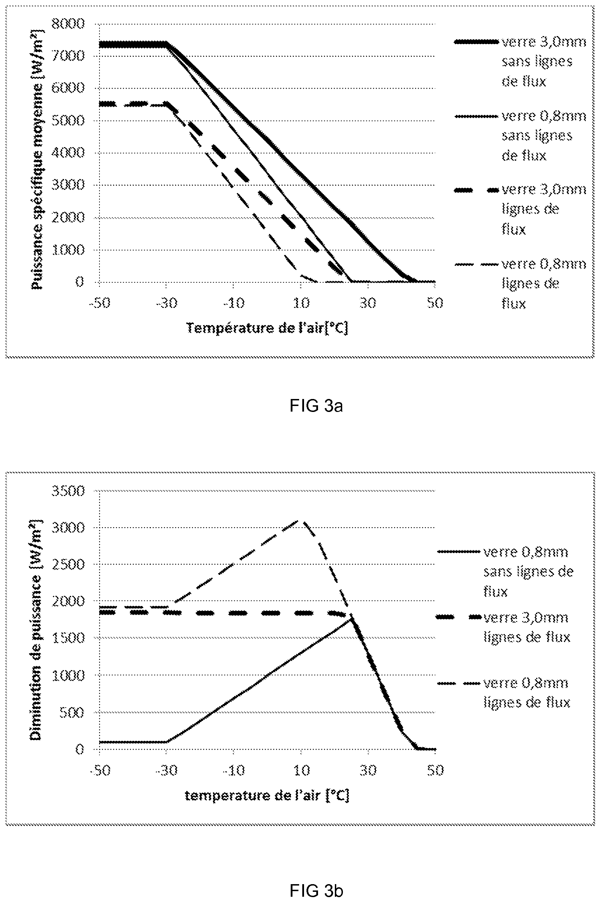

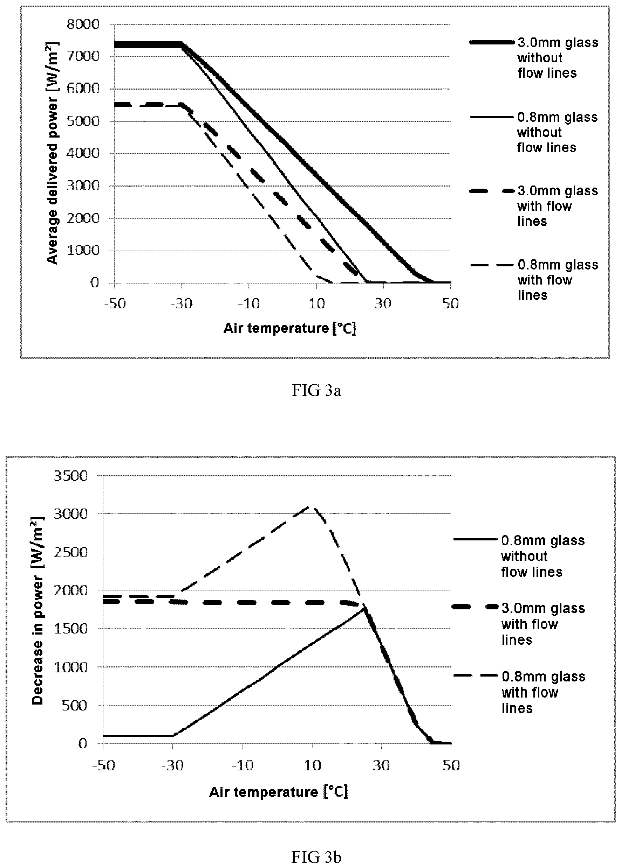

Les résultats sont consignés sous la forme des courbes des Figures 3a et 3b équivalentes qui montrent que, par rapport au vitrage à verre relativement épais de la Figure 2a sans lignes de flux, la diminution de puissance spécifique moyenne en W/m² est croissante pour les solutions respectives :
- verre 0,8 mm (Fig 2b) sans lignes de flux,
- verre 3 mm (Fig 2a) avec lignes de flux,
- verre 0,8 mm avec lignes de flux.

Le gain est particulièrement important pour les hélicoptères rencontrant souvent des conditions de vol entre -10°C et 30°C.

La partie constante des deux configurations d'assemblage représentées aux Figures 2a et 2b peut être remplacée par un pli ou deux plis de PMMA ou PC d'épaisseur totale typique de 5 à 30mm. Les épaisseurs faibles correspondent plutôt à des applications hélicoptère. Deux plis structurels en matériau polymère peuvent être collés l'un à l'autre par une couche de polyuréthane.

## Revendications

1. Vitrage feuilleté (1) comprenant un premier pli structurel (4) assemblé à une première feuille de verre (2) de 0,5 à 1,5 mm d'épaisseur par l'intermédiaire d'une première couche adhésive intercalaire (3), **caractérisé en ce que** ladite première feuille de verre (2) constitue une première face extérieure (21) du vitrage feuilleté (1), destinée à être en contact avec l'atmosphère extérieure, **en ce que** la face de ladite première feuille de verre (2) orientée vers ladite première couche adhésive intercalaire (3) porte une première couche conductrice chauffante (11) de 2 Angströms à 500 nm d'épaisseur, **en ce que** ladite première couche conductrice chauffante (11) présente des lignes de séparation de flux de 0,05 à 0,2 mm d'épaisseur espacées de 8 à 20 mm, formées par gravure pour guider l'intensité de courant entre deux bandes d'amenée de courant disposées le long de deux bords opposés du vitrage (1), **en ce que** ledit premier pli structurel (4) consiste en une feuille de verre d'épaisseur comprise entre 4 à 10 mm ou de matériau polymère d'épaisseur comprise entre 5 et 20 mm, et **en ce que** ladite première couche adhésive intercalaire (3) consiste en une couche de polyvinylbutyral (PVB), polyuréthane (PU) ou poly(éthylène-acétate de vinyle) (EVA) de 0,5 à 20, de préférence 1 à 16 mm d'épaisseur.

2. Vitrage feuilleté (1) selon la revendication 1, **caractérisé en ce qu'**il comprend un second pli structurel (6) assemblé au premier par l'intermédiaire d'une seconde couche adhésive intercalaire (5).

3. Vitrage feuilleté (1) selon la revendication 1 ou 2, **caractérisé en ce qu'**il comprend une seconde feuille de verre de 0,5 à 1,5 mm d'épaisseur assemblée audit premier (4) ou second pli structurel (6) par l'intermédiaire d'une troisième couche adhésive intercalaire.

4. Vitrage feuilleté (1) selon la revendication 3, **caractérisé en ce que** ladite seconde feuille de verre constitue une seconde face extérieure (22) du vitrage feuilleté (1), et **en ce que** la face de ladite seconde feuille de verre orientée vers ladite troisième couche adhésive intercalaire porte une seconde couche conductrice chauffante de 2 Angströms à 500 nm d'épaisseur.

5. Vitrage feuilleté (1) selon la revendication 4, **caractérisé en ce que** ladite seconde couche conductrice chauffante présente des lignes de séparation de flux de 0,05 à 0,2 mm d'épaisseur espacées de 8 à 20 mm.

6. Vitrage feuilleté (1) selon l'une des revendications 1 ou 2, **caractérisé en ce que** lesdits premier (4) et second (6) plis structurels consistent chacun indépendamment l'un de l'autre en une feuille de verre d'épaisseur comprise entre 4 à 10 mm ou de matériau polymère d'épaisseur comprise entre 5 et 20 mm.

7. Vitrage feuilleté (1) selon la revendication 6, **caractérisé en ce que** lesdits premier (4) et second (6) plis structurels consistent chacun indépendamment l'un de l'autre en une feuille de verre semi-trempé thermiquement ou renforcé chimiquement, ou de poly(méthacrylate de méthyle) (PMMA) ou de polycarbonate (PC).

8. Vitrage feuilleté (1) selon l'une des revendications 1 ou 3, **caractérisé en ce que** lesdites première (2) et seconde feuilles de verre de 0,5 à 1,5 mm d'épaisseur sont renforcées chimiquement.

9. Vitrage feuilleté (1) selon l'une des revendications 1, 2 ou 3, **caractérisé en ce que** lesdites première (3), seconde (5) et troisième couches adhésives intercalaires consistent, indépendamment l'une de l'autre en une couche de polyvinylbutyral (PVB), polyuréthane (PU) ou poly(éthylène-acétate de vinyle) (EVA) de 0,5 à 20, de préférence 1 à 16 mm d'épaisseur.

10. Vitrage feuilleté (1) selon l'une des revendications 1 ou 4, **caractérisé en ce que** lesdites première (11) et seconde couches conductrices chauffantes consistent indépendamment l'une de l'autre en une couche d'oxyde conducteur tel qu'oxyde d'indium dopé à l'étain (ITO), oxyde d'étain dopé au fluor (SnO₂ :F) ou oxyde de zinc dopé à l'aluminium (AZO) de 20 à 500 nm d'épaisseur, ou en une couche métallique telle que d'or de 2 à 100 Angströms d'épaisseur.

11. Vitrage feuilleté (1) selon l'une des revendications 1 ou 5, **caractérisé en ce que** les lignes de séparation de flux sont disposées suivant des lignes sensiblement parallèles qui se raccordent sensiblement orthogonalement à leurs deux bandes d'amenée de courant respectives et qui présentent des courbures ou inflexions lorsque lesdites deux bandes ou parties desdites deux bandes en regard forment un angle entre elles.

12. Vitrage feuilleté (1) selon l'une des revendications 1 ou 4, **caractérisé en ce que** ladite première (11) ou seconde couche conductrice chauffante présente un gradient d'épaisseurs.

13. Application d'un vitrage feuilleté (11) selon l'une des revendications précédentes comme vitrage de cockpit d'avion ou d'hélicoptère.

14. Application selon la revendication 13 comme vitrage antigivre.

15. Application d'un vitrage feuilleté (11) selon l'une des revendications 13 ou 14 comme vitrage antibuée.

## Patentansprüche

1. Verbundverglasung (1), die eine erste Strukturlage (4) umfasst, die mit einer ersten Glasscheibe (2) mit einer Stärke von 0,5 bis 1,5 mm über eine erste Haftzwischenschicht (3) verbunden ist, **dadurch gekennzeichnet, dass** die erste Glasscheibe (2) eine erste Außenfläche (21) der Verbundverglasung (1) bildet, die mit der Außenumgebung in Kontakt sein soll, dadurch, dass die Fläche der ersten Glasscheibe (2), die zur ersten Haftzwischenschicht (3) gerichtet ist, eine erste leitende Heizschicht (11) mit einer Stärke von 2 Angström bis 500 nm trägt, dadurch, dass die erste leitende Heizschicht (11) Flusstrennlinien mit einer Stärke von 0,05 bis 0,2 mm in einem Abstand von 8 bis 20 mm aufweist, die eingraviert sind, damit die Stromintensität zwischen zwei Stromzuleitungsstreifen geführt wird, die entlang von zwei gegenüberliegenden Rändern der Verglasung (1) angeordnet sind, **dadurch gekennzeichnet, dass** die erste Strukturlage (4) aus einer Glasscheibe mit einer Stärke zwischen 4 und 10 mm oder einer Scheibe aus einem Polymerwerkstoff mit einer Stärke zwischen 5 und 20 mm besteht, und dadurch, dass die erste Haftzwischenschicht (3) aus einer Schicht aus Polyvinylbutyral (PVB), Polyurethan (PU) oder Polyethylenvinylacetat (EVA) mit einer Stärke von 0,5 bis 20, vorzugsweise 1 bis 16 mm besteht.

2. Verbundverglasung (1) nach Anspruch 1, **dadurch gekennzeichnet, dass** sie eine zweite Strukturlage (6) umfasst, die mit der ersten über eine zweite Haftzwischenschicht (5) verbunden ist.

3. Verbundverglasung (1) nach Anspruch 1 oder 2, **dadurch gekennzeichnet, dass** sie eine zweite Glasscheibe mit einer Stärke von 0,5 bis 1,5 mm umfasst, die mit der ersten (4) oder zweiten Strukturlage (6) über eine dritte Haftzwischenschicht verbunden ist.

4. Verbundverglasung (1) nach Anspruch 3, **dadurch gekennzeichnet, dass** die zweite Glasscheibe eine zweite Außenfläche (22) der Verbundverglasung (1) bildet, und dadurch, dass die Fläche der zweiten Glasscheibe, die zur dritten Haftzwischenschicht gerichtet ist, eine zweite leitende Heizschicht mit einer Stärke von 2 Angström bis 500 nm trägt.

5. Verbundverglasung (1) nach Anspruch 4, **dadurch gekennzeichnet, dass** die zweite leitende Heizschicht Flusstrennlinien mit einer Stärke von 0,05 bis 0,2 mm in einem Abstand von 8 bis 20 mm aufweist.

6. Verbundverglasung (1) nach Anspruch 1 oder 2, **dadurch gekennzeichnet, dass** die erste (4) und zweite (6) Strukturlage jeweils unabhängig voneinander aus einer Glasscheibe mit einer Stärke zwischen 4 und 10 mm oder einer Scheibe aus einem Polymerwerkstoff mit einer Stärke zwischen 5 und 20 mm bestehen.

7. Verbundverglasung (1) nach Anspruch 6, **dadurch gekennzeichnet, dass** die erste (4) und zweite (6) Strukturlage jeweils unabhängig voneinander aus einer thermisch teilvorgespannten oder chemisch verstärkten Glasscheibe oder einer Scheibe aus Polymethylmethacrylat (PMMA) oder aus Polycarbonat (PC) bestehen.

8. Verbundverglasung (1) nach Anspruch 1 oder 3, **dadurch gekennzeichnet, dass** die erste (2) und zweite Glasscheibe mit einer Stärke von 0,5 bis 1,5 mm chemisch verstärkt sind.

9. Verbundverglasung (1) nach einem der Ansprüche 1, 2 oder 3, **dadurch gekennzeichnet, dass** die erste (3), zweite (5) und dritte Haftzwischenschicht unabhängig voneinander aus einer Schicht aus Polyvinylbutyral (PVB), Polyurethan (PU) oder Polyethylenvinylacetat (EVA) mit einer Stärke von 0,5 bis 20, vorzugsweise 1 bis 16 mm bestehen.

10. Verbundverglasung (1) nach Anspruch 1 oder 4, **dadurch gekennzeichnet, dass** die erste (11) und zweite leitende Heizschicht unabhängig voneinander aus einer Schicht aus einem leitenden Oxid wie zinndotiertes Indiumoxid (ITO), fluordotiertes Zinnoxid (SnO₂:F) oder aluminiumdotiertes Zinkoxid (AZO) mit einer Stärke von 20 bis 500 nm oder aus einer Metallschicht wie einer Goldschicht mit einer Stärke von 2 bis 100 Angström bestehen.

11. Verbundverglasung (1) nach Anspruch 1 oder 5, **dadurch gekennzeichnet, dass** die Flusstrennlinien entlang von im Wesentlichen parallelen Linien angeordnet sind, die im Wesentlichen senkrecht mit ihren beiden jeweiligen Stromzuleitungsstreifen verbunden sind und die Krümmungen oder Biegungen aufweisen, wenn die einander gegenüberliegenden beiden Streifen oder Abschnitte der beiden Streifen einen Winkel zueinander aufweisen.

12. Verbundverglasung (1) nach Anspruch 1 oder 4, **dadurch gekennzeichnet, dass** die erste (11) oder zweite leitende Heizschicht einen Dickenverlauf aufweist.

13. Verwendung einer Verbundverglasung (11) nach einem der vorhergehenden Ansprüche als Cockpitverglasung für ein Flugzeug oder einen Hubschrauber.

14. Verwendung nach Anspruch 13 als Vereisungsschutzverglasung.

15. Verwendung einer Verbundverglasung (11) nach Anspruch 13 oder 14 als Beschlagschutzverglasung.

## Claims

1. Laminated glazing (1) comprising a first structural ply (4) assembled with a first glass sheet (2) of 0.5 to 1.5 mm thickness by way of a first adhesive interlayer (3), **characterized in that** said first glass sheet (2) forms a first exterior face (21) of the laminated glazing (1), which face is intended to make contact with the exterior atmosphere, **in that** the face of said first glass sheet (2) oriented toward said first adhesive interlayer (3) bears a first conductive heating layer (11) of 2 Ångströms to 500 nm thickness, **in that** said first conductive heating layer (11) comprises flow-separating lines of 0.05 to 0.2 mm thickness spaced apart by 8 to 20 mm, said lines being formed by etching in order to guide current between two current feed strips placed along two opposite edges of the glazing (1), **in that** said first structural ply (4) consists of a sheet of glass of thickness comprised between 4 and 10 mm or of polymer of thickness comprised between 5 and 20 mm, and **in that** said first adhesive interlayer (3) consists of a layer of polyvinyl butyral (PVB), polyurethane (PU) or poly(ethylene-vinyl acetate) (EVA) of 0.5 to 20 and preferably 1 to 16 mm thickness.

2. Laminated glazing (1) according to Claim 1, **characterized in that** it comprises a second structural ply (6) assembled with the first by way of a second adhesive interlayer (5).

3. Laminated glazing (1) according to Claim 1 or 2, **characterized in that** it comprises a second glass sheet of 0.5 to 1.5 mm thickness assembled with said first structural ply (4) or said second structural ply (6) by way of a third adhesive interlayer.

4. Laminated glazing (1) according to Claim 3, **characterized in that** said second glass sheet forms a second exterior face (22) of the laminated glazing (1), and **in that** the face of said second glass sheet oriented toward said third adhesive interlayer bears a second conductive heating layer of 2 Ångströms to 500 nm thickness.

5. Laminated glazing (1) according to Claim 4, **characterized in that** said second conductive heating layer comprises flow-separating lines of 0.05 to 0.2 mm thickness, said lines being spaced apart by 8 to 20 mm.

6. Laminated glazing (1) according to either of Claims 1 and 2, **characterized in that** said first structural ply (4) and said second structural ply (6) each consist, independently of each other, of a glass sheet of thickness comprised between 4 and 10 mm or of a polymer of thickness comprised between 5 and 20 mm.

7. Laminated glazing (1) according to Claim 6, **characterized in that** said first structural ply (4) and said second structural ply (6) each consist, independently of each other, of a chemically toughened or semi-thermally-tempered glass sheet, or of polymethyl methacrylate (PMMA) or of polycarbonate (PC).

8. Laminated glazing (1) according to either of Claims 1 and 3, **characterized in that** said first glass sheet (2) of 0.5 to 1.5 mm thickness and said second glass sheet of 0.5 to 1.5 mm thickness are chemically toughened.

9. Laminated glazing (1) according to either Claim 1, 2 or 3, **characterized in that** said first adhesive interlayer (3), said second adhesive interlayer (5) and said third adhesive interlayer consist, independently of one another, of a layer of polyvinyl butyral (PVB), polyurethane (PU) or ethylene vinyl acetate (EVA) of 0.5 to 20 and preferably 1 to 16 mm thickness.

10. Laminated glazing (1) according to either of Claims 1 and 4, **characterized in that** said first conductive heating layer (11) and said second conductive heating layer consist, independently of each other, of a layer of a conductive oxide such as tin-doped indium oxide (ITO), fluorine-doped tin oxide (SnO₂:F) or aluminum-doped zinc oxide (AZO) of 20 to 500 nm thickness, or of a layer of a metal such as gold of 2 to 100 Ångströms thickness.

11. Laminated glazing (1) according to either of Claims 1 and 5, **characterized in that** the flow-separating lines are arranged in substantially parallel lines that connect substantially orthogonally to their two respective current feed strips and that have curvatures or inflections when said two facing strips or portions of said two strips make an angle to each other or one another.

12. Laminated glazing (1) according to either of Claims 1 and 4, **characterized in that** said first conductive heating layer (11) or said second conductive heating layer has a thickness gradient.

13. Use of a laminated glazing (11) according to one of the preceding claims as a helicopter or airplane cockpit glazing.

14. Use according to Claim 13 as an anti-frost glazing.

15. Use of a laminated glazing (11) according to either of Claims 13 and 14 as an antifog glazing.
